Europäisches Patentamt

(19) European Patent Office

Office européen des brevets

(11) Publication number: **0 121 285**

**A1**

(12) **EUROPEAN PATENT APPLICATION**

(21) Application number: **84200458.2**

(22) Date of filing: **28.03.84**

(51) Int. Cl.³: **B 62 H 5/14**
**E 05 B 15/16**

(30) Priority: **31.03.83 NL 8301166**

(43) Date of publication of application:
**10.10.84 Bulletin 84/41**

(84) Designated Contracting States:
**AT BE CH DE FR GB IT LI LU NL SE**

(71) Applicant: **STENMAN HOLLAND B.V.**
**Energiestraat 2 P.O. Box 47**
**NL-3903 AV Veenendaal(NL)**

(72) Inventor: **Hofstede, Willem**
**62 Poortjesgoed**
**NL-3901 LD Veenendaal(NL)**

(74) Representative: **Timmers, Cornelis Herman**
**Johannes et al,**
**EXTERPATENT Willem Witsenplein 4**
**NL-2596 BK 's-Gravenhage(NL)**

(54) **Bicycle lock.**

(57) A bicycle lock having a locking pin 6 made of hardened steel and capable of swivelling about a shaft crossing the wheel axle, said locking pin 6 being rotatable about its own axis, supported with one end in a casing 5, coupled to a locking mechanism contained therein, and over at least the portion protruding from the casing being covered with a sleeve 12 of pliant material.

_FIG. 1._

EP 0 121 285 A1

Croydon Printing Company Ltd.

## Bicycle lock.

The invention relates to a bicycle lock having a locking pin made of hardened steel and capable of swivelling about a shaft crossing the wheel axle, said locking pin, while being rotatable about its own axis, being supported with one end in a casing and being coupled to a locking mechanism contained therein.

Locks of this type are commonly known from practice. Usually, the free end of the locking pin cooperates with a fixed part in which it is being held while the pin is being turned into its locked position.

It is possible to force such a lock by wrenching the locking pin about its own axis using a suitable tool, for example a pipe wrench. Obviously, the locking mechanism - usually a lock cylinder - will resist such twisting, but if a sufficiently great couple is exerted successfully, then either the cylinder mechanism is forced or the coupling member between the lock cylinder and the locking pin will break. Naturally, the locking pin has been surface-hardened so as to prevent it from being sawn through, but when employing a wrench having sharp teeth and when exerting sufficient force, several tooth edges will penetrate the hard surface layer and get a hold on the softer underlying material.

The object of the invention is to provide a lock as defined above which cannot be forced in this manner.

To this end, according to the invention, said pin is covered, at least over the portion protruding from the casing, with a sleeve of pliant material.

Practice has shown that, when trying to force such a lock in the manner described hereinbefore, there is left, after each exertion, between the teeth of the wrench and the sleeve surface a layer of - albeit sometimes extremely thin - sleeve material, as a result of which the teeth slide over the surface without encountering sufficient grip thereon.

Preferably, the sleeve consists of mild steel and is rotatable with respect to the pin, while being fitted on the pin in such a manner that it is secured against displacement in the longitudinal direction of the pin.

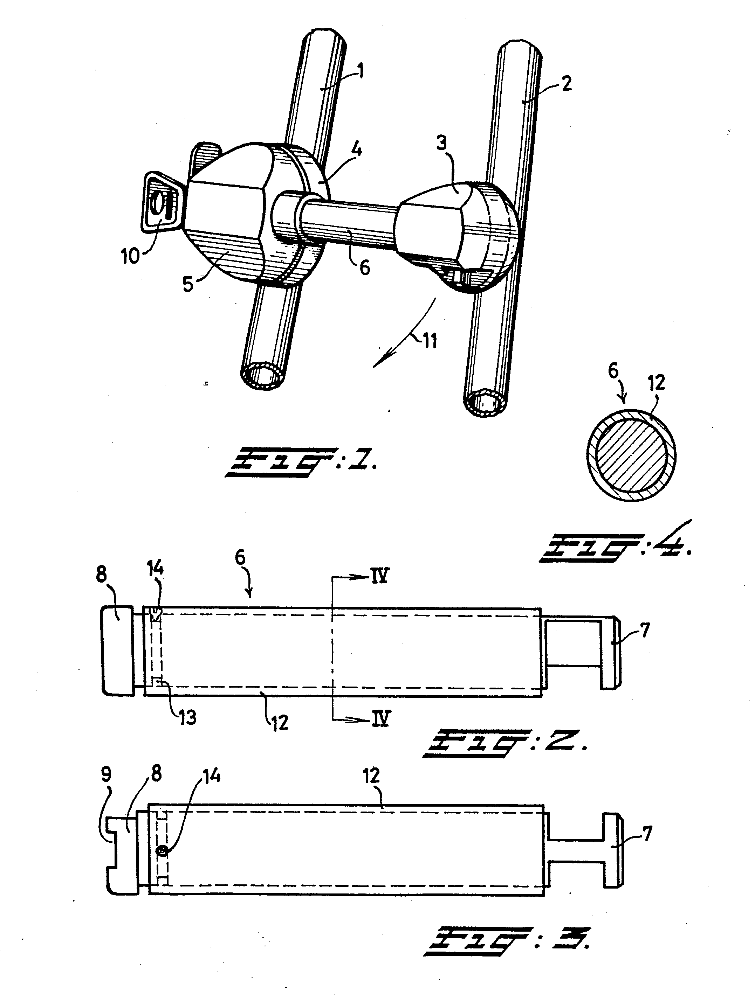

The invention is further explained with reference to the drawing. Fig. 1 is a perspective view of a lock as per the invention mounted on a bicycle fork;
Fig. 2 is a first view of the locking pin used therein with the associated sleeve;

Fig. 3 is a second view of said locking pin;

Fig. 4 is a sectional view taken on the line IV-IV in fig. 2.

In fig. 1, the fork legs of a bicycle, on which the lock according to the invention is mounted, are indicated by the reference numerals 1 and 2. To the leg 1 is fixedly secured the fixed lock part 4 which carries a swivel pin, not shown in the drawing, about which the movable casing part 5 can turn over 90° for the purpose of opening or closing the lock. From the casing part 5 extends the locking pin 6 in the locked position, the narrowed portion 7 thereof fits into the part 3 fixedly mounted to the fork leg 2. By turning the locking pin over 90°, the part 7 engages behind a cam, not shown, provided within the part 3, thus rendering it impossible to open the lock. At the end 8 facing away from the end 7, the locking pin 6 is provided with a groove 9 into which fits a coupling member, not shown, connected with the lock cylinder contained in the casing part 5.

This type of lock design is commonly known. Using a key 10, the lock cylinder and, along with it, the locking pin, can be turned over 90°, thus releasing the end 7 from the cam in the part 3 and enabling the whole to be turned in the direction of the arrow 11.

Such a lock can obviously be forced if the locking pin of the closed lock is wrenched successfully over 90°. When the lock is closed, this should obviously not be possible as a result of the pins or plates protruding in such case from the lock cylinder, but when applying a sufficiently great couple, the coupling member between the cylinder and the locking pin will break.

According to the invention, a sleeve 12 made of a relatively soft, pliant material, for instance mild steel, is fitted about the locking pin 6. Said sleeve can freely turn about the pin, but cannot be displaced in the longitudinal direction of the pin, since, in the vicinity of the end 9, the pin is provided with a groove 13 fittingly receiving a depressed portion 14 of the sleeve 12.

Practice has shown that, when trying to get sufficient grip on the locking pin using no matter what kind of tool, this will invariably result in a thin layer of the material of the sleeve 12 being left behind between the teethe of the tool and the pin, thus causing the teeth to slide over the pin surface without taking along the pin, regardless of the amount of force being exerted.

It is observed that the reference numerals in the claims are not intended to restrict the scope thereof, but are only denoted for clarification.

Claims:

1.    A bicycle lock having a locking pin (6) made of hardened steel and capable of swivelling about a shaft crossing the wheel axle, said locking pin (6), while being rotatable about its own axis, being supported with one end in a casing (5) and being coupled to a locking mechanism contained therein, characterized in that over at least the portion protruding from the casing (5) the pin (6) is covered with a sleeve (12) of pliant material.

2.    A bicycle lock according to claim 1, characterized in that the sleeve (12) is made of mild steel.

3.    A bicycle lock according to claim 2, characterized in that the sleeve (12) is capable of free rotation with respect to the pin (6) and is secured against displacement with respect to the pin in the longitudinal direction.

Fig:1.

Fig:4.

Fig:2.

Fig:3.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-1 599 487 (WARTSILA) | | B 62 H 5/14<br>E 05 B 15/16 |
| A | US-A-1 979 893 (LYONS) | | |

TECHNICAL FIELDS
SEARCHED (Int. Cl. 3)

B 62 H
E 05 B

The present search report has been drawn up for all claims

| Place of search<br>THE HAGUE | Date of completion of the search<br>05-07-1984 | Examiner<br>VAN BOGAERT J.A.M.M. |
|---|---|---|

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503. 03.82